# EUROPEAN PATENT SPECIFICATION

(11) **EP 2 426 862 B1**
(45) Date of publication and mention of the grant of the patent: **12.08.2015**
(21) Application number: 10769368.1
(22) Date of filing: 28.04.2010
(51) Int. Cl.: H04L 12/26, H04L 12/24

(54) **APPLIANCE FOR THE CERTIFIED MEASUREMENT OF THE BANDWIDTH OF A NETWORK ACCESS AND METHOD FOR THE CALIBRATION THEREOF**
VORRICHTUNG FÜR DIE ZERTIFIZIERTE MESSUNG DER BANDBREITE EINES NETZWERKZUGANGS UND KALIBRIERVERFAHREN DAFÜR
APPAREIL POUR LA MESURE CERTIFIÉE DE LA LARGEUR DE BANDE D'UN ACCÈS RÉSEAU ET PROCÉDÉ D'ÉTALONNAGE DUDIT APPAREIL

(30) Priority: 29.04.2009 ES 200901127
(43) Date of publication of application: 07.03.2012
(73) Proprietor: Universidad Autónoma de Madrid, 28049 Madrid (ES)
(72) Inventor: ARACIL RICO, Javier, E-28049 Madrid (ES); LÓPEZ DE VERGARA MÉNDEZ, Jorge, E-28049 Madrid (ES); LÓPEZ BUEDO, Sergio, E-28049 Madrid (ES); DE PEDRO SÁNCHEZ, Luis, E-28049 Madrid (ES); RAMOS DE SANTIAGO, Javier, E-28049 Madrid (ES)
(74) Representative: ABG Patentes, S.L.
(86) International application number: PCT/ES2010/070269
(87) International publication number: WO 2010/125223

(56) References cited:
- EP-A1- 1 802 015
- WO-A1-2008/085299
- US-A1- 2003 212 533
- US-B1- 6 341 145
- US-B1- 7 424 526
- ANGRISANI L. ET AL.: 'Testing communication and computer networks: an overview' IEEE INSTRUMENTATION & MEASUREMENT MAGAZINE vol. 11, no. 5, 01 October 2008, PISCATAWAY, NJ, US, pages 12 - 24, XP011292733

## Description

### Technical field of the invention

The invention relates to an apparatus that has been specially conceived to calibrate with high accuracy, and in a certified fashion, the bandwidth of a network access from an Internet Service Provider.

The object of the invention is to provide an apparatus that allows to accurately verify if the provided bandwidth matches that which was actually contracted, in such a way that the measurement has legal validity.

More specifically, the apparatus performs the set of measurements listed in the 29th March 2006 order ITC/912/2006, BOE (Spanish Official Bulletin) dated 31st March 2006, which establishes the regulations concerning quality of service in the provision of electronic communication services.

This invention also encompasses the calibration method for the apparatus. Therefore, the scope of the invention is communication networks.

### Background of the invention

As it turns out, telecommunication operators quite frequently offer network accesses, specifically concerning ADSL services, which have bandwidths preestablished in the contract that do not match the actual bandwidth, with a consequent negative impact for the user, because of the ever-growing dependence of users on communication services and their inability to complain. Although there are bandwidth measurement devices to assess the actual bandwidth of a network access, these devices cannot be calibrated, so the

provided measurement is not verifiable and therefore it cannot be established the legal validity thereof, which in turn invalidates possible complains.

Document US7424526B1 discloses a bandwidth measurement device according to the preamble of claim 1.

Therefore, a device or apparatus that allows certifying the quality of a broadband network access, such as for instance the Internet, is desirable, being facilitated the calibration of the apparatus.

### DESCRIPTION OF THE INVENTION

This object of the invention, among others, is achieved by means of an apparatus according to claim 1, a calibration method according to claim 6, a computer program according to claim 7 and a computer readable media according to claim 8. The particular embodiments of the apparatus and method subject of the invention are defined in the corresponding claims.

In a first inventive aspect, a measurement apparatus that allows certifying the bandwidth of a broadband network access is presented, which obtains measurement figures that are calibrated against a reference clock which is considered legally exact. Preferably, the broadband network is the Internet.

To this end, the apparatus of the invention performs the measurements listed in the Spanish ministerial Order ITC/912/2006, dated 29th March, and published in the Spanish BOE, on 31^{st} March 2006, and more specifically the measurements IV.1, IV.2 and IV.3:
IV.1 Percentage of successful user connection attempts.- In accordance with the definition and measurement method of section 5.4 of document ETSI EG 202 057-4, with the following remark.
   - The calculation of this parameter includes all failed connection attempts, either due to failures in the access network failures or the equipment of the Internet service provider.
IV.2 Percentage of failed data transmissions: In accordance with the definition and measurement method of section 5.3 of document ETSI EG 202 057-4, with
   - A transmission attempt is considered failed if such transmission is not completed free of errors either within 60 seconds from the start, considering a test file transmission with a size (in kilobits) which is equal to eight times the maximum nominal capacity of the connection (expressed in kilobits/second), or within a time interval which is proportionally equivalent according to the ratio between the file size and the connection speed.
IV.3 Attained data transmission speed: In accordance with the definition and measurement methods of section 5.2 of document ETSI EG 202 057-4, with the following remark:
   - The attained data transfer speed will be calculated in relationship with the data transmission speed obtained by users in a file download to his/her computer or terminal equipment.

Therefore, measurement IV.1 measures the time it takes to connect and if this time is too high, the connection attempt is deemed failed. Measurements IV.2 and IV.3 measure the time to download a file using the Transmission Control Protocol (TCP). The download rate is immediately obtained, dividing the downloaded bits by the download time.

More specifically, the apparatus comprises processing means with which the indicated measurements are performed through the corresponding network interfaces, such that the resulting measurements are stored in storage means. According to this arrangement, the network interface must be connected to the network access to be measured, so that, when that signal has been measured by the abovementioned processor, the processor sends a calibration signal via an output port, which makes the measurement valid because it is compared with an external calibrated source.

To this end, the processor internal clock is compared with an external reference clock which is considered legally accurate.

In a second inventive aspect, the invention presents a calibration method of the apparatus according to the first inventive aspect.

The comparison between times is performed in such a way that the external reference clock is associated with a standard pulse counter, which measures a signal that is sent through the serial port of the device. Thus, as soon as the download of file being used to calculate the bandwidth of the network access finishes, the signal is turned off and the exact measurement of the elapsed time is compared with the time provided by the processor internal clock, assessing the possible time deviations in the device, and allowing certification of the equipment according to the obtained results.

Therefore, and according to this arrangement, a telecommunication service user can effectively complain against the contracted operator, because the device of the invention provides a legally valid certification of the quality of the link as perceived by the user.

In a third inventive aspect, a computer program is presented that comprises code means that performs the calibration method according to the second inventive aspect, when this program is run in a computer. To this end, the computer will be connected with the apparatus for the calibrated measurement of the bandwidth of a broadband access.

Finally, in a fourth inventive aspect, a computer readable media is presented that contains a computer program comprising code means to perform the calibration method according to the second inventive aspect, whenever such program is run in a computer.

### DESCRIPTION OF THE FIGURES

In order to complement the current description and to provide a better understanding on the features of the invention, a set of drawings is included as integral part of this description, where for illustrative but non-limiting purposes it is represented:
Figure 1 shows a schematic block diagram of the several elements that make up the apparatus for certified measurement of the bandwidth of a network access according to the invention.
Figure 2 shows a schematic representation of the interchange of signals during the measurement of bandwidth of a connection.

### PREFERENTIAL EMBODIMENT OF THE INVENTION

In light of the figures it can be observed that the apparatus proposed in the invention comprises processing means (1), that can either be a CPU or an FPGA for a better accuracy, which processing means (1) are associated with a network interface (2), such as for instance a RJ-45 interface to measure Ethernet or any other, through which a number of measurements of the quality parameters of a broadband access are carried out with the corresponding software, measurements which are stored in storage means (3).

In a specific embodiment, the measured parameters correspond to measurements IV-1, IV-2 and IV-3, as per the Spanish ministerial order ITC/912/2006.

In a specific embodiment, the storage means (3) are a flash memory or a hard disk.

Additionally, the processor is likewise associated with a serial communication port (4) through which the equipment can be certified, by means of which a calibration signal is sent (5), which grants a legal validity to the measurement, because it is compared with an external calibrated clock source.

According to an advantageous embodiment, the external calibrated clock source (6), which is made up by an external reference clock, is provided by the "Real Observatorio de la Armada" (Royal Observatory of the Navy) in Cadiz, Spain, a source which makes use of the Global Positioning System (GPS).

A standard pulse counter, for instance Hewlett Packard model HP5316B, is associated with this external clock source (6) which serves to measure the duration of the signal (5) which is sent through the serial port (4), taking as a reference the external source clock.

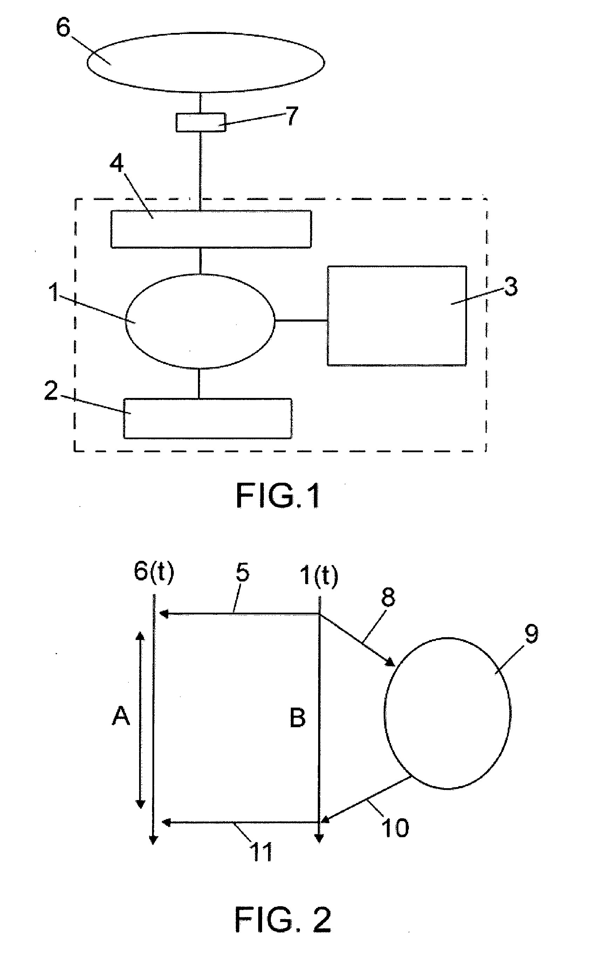

More specifically, as shown in figure 2, a signal (5) is sent through the serial port RS-232 (4), namely a pulse, exactly when the TCP connection starts (8) to the network (9) that performs the file download (right before sending the SYN packet). When a FIN packet (10) is sent to indicate the TCP connection ends (10), the pulse is turned off (11) and the external pulse counter (7) registers the measurement (A). Such measurement or time (A) is compared with the measurement or time (B) of the internal processor clock (1) to assess the deviations that the device may be incurred, in such a way that the bandwidth measurements can be deemed as correct.

## Claims

1. A device for the certified bandwidth measurement of a broadband network access, comprising:
processing means (1) for performing a number of measurements of parameters related to the quality of a broadband network
a network interface (2) for connecting to the network access to be measured, and
storage means (3) for storing the results of the measurements;
**characterised in that**:
the device comprises a communication port (4) in communication with an external reference clock (6) which is calibrated and legally valid
and **in that** the processing means (1) communicate through the communication port (4) with the external reference clock (6) calibrated, for the assessment of the parameters.

2. Device according to claim 1, **characterised in that** it comprises pulse counting means (7) for the calibration signals which come from the communication port (4), associated to the processing means (1).

3. Device according to claim 1, **characterised in that** the processing means (1) are either a CPU or an FPGA.

4. Device for the certified measurement of bandwidth in a network access according to claim 1, **characterised in that** the processing means (1) performs the measurements listed in the 29^{th} March 2006 Spanish ministerial order ITC/912/2006 , published in the Spanish BOE dated 31^{st} March 2006.

5. Device according to claim 1, **characterised in that** the storage means (3) are a Flash memory or a hard disk.

6. Calibration method of a device according to any of the claims 1-5, **characterised in that** it comprises the following steps:
sending a signal (5) through the communication port (4), namely a pulse, exactly when the processor (1) starts the TCP connection (8) to the network (9) that performs the file download (right before sending the SYN packet).
turning off (11) the pulse (5) when the FIN packet (10) is sent to indicate the connection end,
registering the real measurement or time (A) by the external pulse counter (7) registering the measure or time (B) of the internal clock of the processing means (1),
comparing both measurements to assess the deviations that the device may be incurring.

7. A computer program **characterised in that** it comprises code means to perform the calibration method according to claim 6, when this program is run in a computer.

8. A computer readable media that contains a computer program comprising code means to perform the calibration method according to claim 6, when this program is run in a computer.

## Patentansprüche

1. Vorrichtung für die zertifizierte Bandbreitenmessung eines Breitband-Netzwerkzugangs, umfassend:
Verarbeitungsmittel (1) zum Durchführen einer Reihe von Messungen von für die Qualität eines Breitbandnetzwerks relevanten Parametern,
eine Netzwerkschnittstelle (2) für den Anschluss an den zu messenden Netzwerkzugang, und
Speichermittel (3) zum Speichern der Ergebnisse der Messungen;
**dadurch gekennzeichnet, dass**
die Vorrichtung einen Kommunikationsausgang (4) umfasst, der in Verbindung mit einer externen Referenzuhr (6) steht, die kalibriert und rechtsgültig ist
und **dadurch,** dass die Verarbeitungsmittel (1) durch den Kommunikationsausgang (4) mit der kalibrierten externen Referenzuhr (6) zur Bewertung der Parameter kommunizieren.

2. Vorrichtung nach Anspruch 1, **dadurch gekennzeichnet, dass** sie Impuls-Zählmittel (7) für die Kalibrierungssignale umfasst, die von dem Kommunikationsausgang (4) kommen, der mit den Verarbeitungsmitteln (1) verbunden ist.

3. Vorrichtung nach Anspruch 1, **dadurch gekennzeichnet, dass** die Verarbeitungsmittel (1) entweder eine Zentraleinheit (CPU) oder eine FPGA (Field Programmable Gate Array) sind.

4. Vorrichtung für die zertifizierte Messung der Bandbreite in einem Netzwerkzugang nach Anspruch 1, **dadurch gekennzeichnet, dass** die Verarbeitungsmittel (1) die Messungen durchführen, die in der spanischen Ministerialverordnung ITC/912/2006 vom 29. März 2006 aufgelistet sind, veröffentlicht im spanischen Amtsblatt (Boletin Oficial del Estado, BOE) vom 31. März 2006.

5. Vorrichtung nach Anspruch 1, **dadurch gekennzeichnet, dass** die Speichermittel (3) ein Flash-Speicher oder eine Festplatte sind.

6. Kalibrierungsverfahren für eine Vorrichtung nach einem der Ansprüche 1 bis 5, **dadurch gekennzeichnet, dass** es folgende Schritte umfasst:
Senden eines Signals (5) durch den Kommunikationsausgang (4), nämlich eines Impulses, exakt dann, wenn der Prozessor (1) eine TCP-Verbindung (8) mit dem Netzwerk (9) startet, das den Datei-Download durchführt (unmittelbar vor dem Senden des SYN-Pakets),
Abschalten (11) des Impulses (5), wenn das FIN-Paket (10) gesendet wurde, das das Verbindungsende anzeigt,
Registrieren der echten Messung oder Zeit (A) durch den externen Impulszähler (7),
Registrieren der Messung oder Zeit (B) der internen Uhr der Verarbeitungsmittel (1),
Vergleichen beider Messungen, um die Abweichungen zu bewerten, die die Vorrichtung ggf. verursacht.

7. Computerprogramm, **dadurch gekennzeichnet, dass** es Codemittel umfasst, um das Kalibrierungsverfahren nach Anspruch 6 durchzuführen, wenn dieses Programm auf einem Computer ausgeführt wird.

8. Computerlesbares Medium, das ein Computerprogramm enthält, welches Codemittel umfasst, um das Kalibrierungsverfahren nach Anspruch 6 durchzuführen, wenn dieses Programm auf einem Computer ausgeführt wird.

## Revendications

1. Dispositif pour la mesure certifiée de largeur de bande d'un accès de réseau à large bande, comprenant :
des moyens de traitement (1) pour réaliser un nombre de mesures de paramètres relatifs à la qualité d'un réseau à large bande ;
une interface de réseau (2) pour se connecter à l'accès de réseau destiné à être mesuré, et
des moyens de stockage (3) pour stocker les résultats des mesures ;
**caractérisé en ce que** :
le dispositif comprend un port de communication (4) en communication avec une horloge de référence externe (6) qui est étalonnée et légalement valide,
et **en ce que** les moyens de traitement (1) communiquent par l'intermédiaire du port de communication (4) avec l'horloge de référence externe (6) étalonnée, pour l'évaluation des paramètres.

2. Dispositif selon la revendication 1, **caractérisé en ce qu'**il comprend des moyens de comptage d'impulsions (7), pour les signaux d'étalonnage qui proviennent du port de communication (4), associés aux moyens de traitement (1).

3. Dispositif selon la revendication 1, **caractérisé en ce que** les moyens de traitement (1) sont une unité centrale de traitement (CPU) ou un réseau de portes programmables (FPGA).

4. Dispositif pour la mesure certifiée de largeur de bande dans un accès de réseau selon la revendication 1, **caractérisé en ce que** les moyens de traitement (1) réalisent les mesures listées dans l'ordre ministériel espagnol du 29 mars 2006 ITC/912/2006, publié dans le Bulletin officiel de l'Etat espagnol du 31 mars 2006.

5. Dispositif selon la revendication 1, **caractérisé en ce que** les moyens de stockage (3) sont une mémoire Flash ou un disque dur.

6. Procédé d'étalonnage d'un dispositif selon une quelconque des revendications 1 à 5, **caractérisé en ce qu'**il comprend les étapes suivantes :
l'envoi d'un signal (5), par l'intermédiaire du port de communication (4), à savoir d'une impulsion, exactement lorsque le processeur (1) commence la connexion TCP (8) au réseau (9) qui réalise le téléchargement de dossier (juste avant d'envoyer le paquet SYN),
l'arrêt (11) de l'impulsion (5) lorsque le paquet FIN (10) est envoyé pour indiquer la fin de connexion,
l'enregistrement de la mesure ou du temps réel (A) par le compteur d'impulsions externe (7),
l'enregistrement de la mesure ou du temps (B) de l'horloge interne des moyens de traitement (1),
la comparaison des deux mesures pour évaluer les écarts que le dispositif subit.

7. Programme d'ordinateur, **caractérisé en ce qu'**il comprend des moyens à code pour réaliser le procédé d'étalonnage selon la revendication 6, lorsque ce programme est exécuté par un ordinateur.

8. Support lisible par ordinateur qui contient un programme d'ordinateur comprenant des moyens à code pour réaliser le procédé d'étalonnage selon la revendication 6, lorsque ce programme est exécuté par un ordinateur.
